# EUROPEAN PATENT SPECIFICATION

(11) **EP 4 503 055 B1**
(45) Date of publication and mention of the grant of the patent: **12.08.2026**
(21) Application number: 22934710.9
(22) Date of filing: 19.09.2022
(51) Int. Cl.: G21C 7/10

(54) **CONTROL ROD AND CONTROL ROD ASSEMBLY**
STEUERSTAB UND STEUERSTABANORDNUNG
TIGE DE COMMANDE ET ENSEMBLE TIGE DE COMMANDE

(30) Priority: 31.03.2022 CN 202210334507
(43) Date of publication of application: 05.02.2025
(73) Proprietor: China Nuclear Power Technology Research Institute Co., Ltd., Shenzhen, Guangdong 518031 (CN); Ling Ao Nuclear Power Co., Ltd., Shenzhen, Guangdong 518028 (CN); China General Nuclear Power Corporation, Shenzhen, Guangdong 518028 (CN); CGN Power Co., Ltd., Shenzen, Guangdong 518028 (CN)
(72) Inventor: LI, Zixi, Shenzhen, Guangdong 518031 (CN); REN, Zhili, Shenzhen, Guangdong 518031 (CN); PANG, Zhengzheng, Shenzhen, Guangdong 518031 (CN); LU, Yaheng, Shenzhen, Guangdong 518031 (CN); PENG, Yao, Shenzhen, Guangdong 518031 (CN)
(74) Representative: Thomas, Tomos Daniel
(86) International application number: PCT/CN2022/119579
(87) International publication number: WO 2023/184891

(56) References cited:
- EP-A1- 0 945 875
- EP-A1- 0 945 875
- CN-A- 102 770 921
- CN-A- 102 789 820
- CN-A- 103 098 142
- CN-A- 110 299 215
- CN-A- 113 012 828
- CN-A- 113 012 828
- CN-A- 114 913 997
- CN-U- 210 606 652
- JP-A- S63 298 194
- US-A- 4 172 762
- US-A- 4 172 762
- US-A- 4 172 762
- US-A- 5 225 151
- US-A1- 2005 135 547

## Description

### TECHNICAL FIELD

The present application relates to the field of nuclear power technology, and in particular, to a control rod and a control rod assembly.

### BACKGROUND

In the related art, a core part of a control rod of a fast neutron reactor is mainly made of boron carbide as an absorber material. During the irradiation operation, the boron carbide undergoes radiation swelling and is broken due to factors such as thermal stress and helium retention. The broken fragments interact with a cladding of the control rod, which may cause damage to the cladding, thereby affecting the integrity of the control rod and shortening the service life of the control rod.

US5225151 is directed to a control rod for nuclear reactors with elongated channels for boron carbide or other neutron-absorbing material which swells upon neutron irradiation, the neutron-absorbing material, in at least some of the channels, is provided with projecting portions or arranged in a casing with portions projecting towards the channel walls.

US2005/135547 is directed to a control element for a nuclear reactor that includes an absorber or absorber material and at least three absorber enclosures for receiving the absorber. The control element is constructed in such a way that there are at least three absorber enclosures and a predetermined spacing between the enclosures, so that each absorber enclosure forms a mechanical resistance for the absorber and is removable from the starting position in the event of expansion of the absorber.

JPS63298194 is directed to a coating pipe in which plural neutron absorber pellets are enclosed and a control rod assembly for a liquid-metal fast breeder reactor is formed. In this case a thin wall pipe is provided between the coating pipe made of metal and pellets. A gap between the inner diameter of the pipe and the outer diameter of the pellets is 0.025-0.2mm. The thickness of the pipe is thin as it comes downward

CN113012828 is directed to a control rod absorber assembly, a control rod and a control rod assembly. The control rod absorber assembly comprises a first absorber, a second absorber and a stress transmission assembly, wherein the first absorber and the second absorber are arranged separately; the second absorber and the first absorber can be axially mounted in a cladding pipe, the stress transmission assembly is arranged on the periphery of the second absorber in a wrapping mode and makes contact with the first absorber in an abutting mode, and the stress transmission assembly is provided with a receding space for the second absorber to expand in the radial direction. The stress transmission assembly is arranged on the periphery of the second absorber in a wrapping mode, and the stress transmission assembly makes contact with the first absorber in an abutting mode; when a second compression spring compresses the first absorber, the stress transmission assembly bears the gravity and the compression stress of the first absorber and transmits the force

EP0945875 is directed to a control rod for a nuclear reactor that has a structure which is capable of suppressing expansion of a reduced-diameter portion of a neutron absorber in a radial direction under shocks applied upon every stepwise driving of a control rod cluster. The control rod includes a cladding tube closed hermetically at both ends thereof by a top end plug and a bottom end plug, respectively, a neutron absorber loaded into the cladding tube and includes a reduced-diameter portion having a smaller diameter than the other portion, the reduced-diameter portion being disposed at the bottom end plug side of the control rod, and a hold-down spring for pressing the neutron absorber downwardly against the bottom end plug. A sleeve is disposed within an annular space defined between an outer peripheral surface of the reduced-diameter portion and an inner peripheral surface of the cladding tube.

US4172762 is directed to a nuclear reactor control rod containing a stack of B4C absorber pellets in which the pellets in the lower end have a radius smaller than that of the other pellets and are wrapped with a sleeve having a linear compressibility sufficient to accommodate exposure-induced radial expansion of the end pellets.

### SUMMARY

According to various embodiments of the present application, a control rod and a control rod assembly are provided.

The present application provides a control rod, including: a core part; a bushing assembly including a first bushing sleeved around the core part; and a cladding sleeved around the first bushing. The first bushing is configured to form a constraint structure surrounding the core part so as to limit expansion of the core part in a radial direction of the core part.

The bushing assembly further includes a second bushing disposed between the first bushing and the cladding. The second bushing extends tortuously in a circumferential direction thereof.

In one of the embodiments, a cross section of the second bushing is in a wavy shape.

In one of the embodiments, the first bushing and the second bushing are coaxially arranged.

In one of the embodiments, the first bushing, the core part and the second bushing are coaxially arranged.

In one of the embodiments, a first gap space is defined between the first bushing and the second bushing.

The first bushing has a first notch. The first notch extends outwardly in a radial direction of the first bushing from a side of the first bushing adjacent to the core part. The first notch is in communication with the first gap space.

In one of the embodiments, a second gap space is defined between the second bushing and the cladding.

The second bushing has a second notch. The second notch extends outwardly in a radial direction of the second bushing from a side of the second bushing adjacent to the first bushing. The second notch is respectively in communication with the first gap space and the second gap space.

In one of the embodiments, a center line of the first notch is set at an angle to a center line of the second notch.

In one of the embodiments, in a longitudinal extending direction of the first bushing, a cross section of the first notch is in an axisymmetric shape. In a longitudinal extending direction of the second bushing, a cross section of the second notch is in an axisymmetric shape. A symmetry center line of the first notch is set at an angle to a symmetry center line of the second notch.

In one of the embodiments, in the longitudinal extending direction of the first bushing, the cross section of the first notch is in a rectangular shape. In the longitudinal extending direction of the second bushing, the cross section of the second notch is also in a rectangular shape.

In one of the embodiments, an angle between a center line of the first notch and a center line of the second notch is 180°.

In one of the embodiments, the first notch and the second notch are staggered in an axial direction of the core part.

In one of the embodiments, an angle between a center line of the first notch and a center line of the second notch is 90° or 60°.

In one of the embodiments, the control rod further includes a first end plug and a second end plug that are respectively connected to opposite ends of the cladding.

In one of the embodiments, the first bushing includes a molybdenum or molybdenum alloy bushing.

In one of the embodiments, a receiving space is defined between the core part and the first bushing.

In one of the embodiments, a gap between the core part and the first bushing is 0.1 mm.

In a second aspect, the present application further provides a control rod assembly, including the control rod as described above.

In one of the embodiments, the control rod assembly further includes at least one fixing component. The control rod is fixed in the fixing component.

In one of the embodiments, the control rod assembly further includes at least one grid. The control rod is fixed in the grid.

The present application provides a control rod assembly, which includes a control rod. The control rod includes a core part, a bushing assembly and a cladding. The bushing assembly includes the first bushing sleeved around the core part. The cladding is sleeved around the first bushing. The first bushing is configured to form a constraint structure surrounding the core part to limit the expansion of the core part in a radial direction of the core part.

The details of one or more embodiments of the present application are set forth in the following drawings and detailed description. Other features, objects, and advantages of the present application will become apparent from the detailed description, drawings, and claims.

### BRIEF DESCRIPTION OF THE DRAWINGS

Various other advantages and benefits will become apparent to those of ordinary skill in the art by reading the detailed description of the preferred embodiments below. In addition, in order to better describe and illustrate the embodiments and/or examples of the inventions disclosed herein, reference may be made to one or more drawings. The additional details or examples used to describe the drawings should not be considered to limit the scope of any of the disclosed inventions, the embodiments and/or examples currently described, and the best modes of these inventions currently understood.
FIG. 1 is a structural schematic view of a control rod according to one or more embodiments.

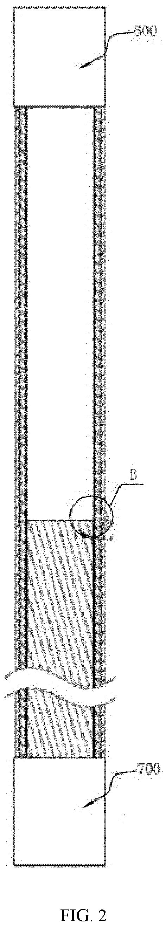

FIG. 2 is a sectional view of the control rod shown in FIG. 1 taken along a line A-A.
FIG. 3 is a partial enlarged view of a portion B of the control rod shown in FIG. 2.

Illustration for reference numerals: 100, core part; 200, bushing assembly; 210, first bushing; 211, first notch; 220, second bushing; 212, second notch; 300, cladding; 400, first gap space; 500, second gap space; 600, first end plug; 700, second end plug; 800, receiving space; L1, center line of the first notch; L2, center line of the second notch.

### DETAILED DESCRIPTION

The following embodiments of the technical solution of the present application are described in detail in conjunction with the accompanying drawings. The following embodiments are only used to more clearly illustrate the technical solution of the present application, and are therefore only used as examples, and cannot be used to limit the scope of protection of the present application.

Unless otherwise defined, all technical and scientific terms used herein have the same meaning as commonly understood by those skills in the art to which this application belongs; the terms used herein are only for the purpose of describing specific embodiments and are not intended to limit this application; the terms "including" and "having" and any variants thereof in the specification, claims, and the above-mentioned descriptions of the drawings of this application are intended to encompass non-exclusive inclusions.

In the description of the embodiments of the present application, the technical terms "first", "second", etc. are only used to distinguish different objects, and cannot be understood as indicating or implying relative importance or implicitly indicating the number, specific order or primary and secondary relationship of the indicated technical features. In the description of the embodiments of the present application, "a plurality of" means more than two, unless otherwise clearly and specifically defined.

Reference to "embodiments" herein means that a particular feature, structure, or characteristic described in conjunction with the embodiments may be included in at least one of the embodiments of the present application. The appearance of the phrase in various locations in the specification does not necessarily refer to the same embodiment, nor is it an independent or alternative embodiment that is mutually exclusive with other embodiments. It is explicitly and implicitly understood by those skilled in the art that the embodiments described herein may be combined with other embodiments.

In the description of the embodiments of the present application, the term "and/or" is only a description of the association relationship of the associated objects, indicating that there may be three relationships. For example, A and/or B can represent: A exists alone, A and B exist at the same time, and B exists alone. In addition, the character "/" herein generally indicates that the associated objects before and after it are in an "or" relationship.

In the description of the embodiments of the present application, the term "a plurality of" refers to more than two (including two). Similarly, " a plurality of groups" refers to more than two groups (including two groups), and " a plurality of pieces" refers to more than two pieces (including two pieces).

In the description of the embodiments of the present application, the technical terms "center", "longitudinal", "lateral", "length", "width", "thickness", "up", "down", "front", "back", "left", "right", "vertical", "horizontal", "top", "bottom", "inside", "outside", "clockwise", "counterclockwise", "axial", "radial", "circumferential", etc. indicate orientations or positional relationships based on the orientations or positional relationships shown in the accompanying drawings, and are only for the convenience of describing the embodiments of the present application and simplifying the description, and do not indicate or imply that the referred device or element must have a specific orientation, be constructed and operated in a specific orientation, and therefore should not be understood as a limitation on the embodiments of the present application.

In the description of the embodiments of the present application, unless otherwise clearly specified and limited, technical terms such as "mounting", "coupling", "connection", "fixation" and the like should be understood in a broad sense, for example, which may be a fixed connection, a detachable connection, or an integral connection; or may be a mechanical connection or an electrical connection; or may be a direct connection or an indirect connection through an intermediate medium; or may be an internal communication of two elements or the interaction relationship between two elements. For those of ordinary skill in the art, the specific meanings of the above terms in the embodiments of the present application can be understood according to the specific circumstances.

Control rods function as compensating and regulating neutron reactivity and emergency shutdown in nuclear reactors. When a control rod is fully inserted into the center of the reactor, the control rod can absorb a large number of neutrons and prevent the chain fission reaction from proceeding. When the control rod is pulled out, the positive reactivity of the reactor increases. The more portions of the control rod are pulled out, the less the control rod absorbs neutrons, and more neutrons can participate in the fission reaction, introducing more positive reactivity and enhancing or maintaining the nuclear reaction of the reactor. In the relevant art of fast neutron reactors, a control rod includes a core part mainly made of boron carbide, and is designed to have a structure of "core part-cladding", that is, the control rod includes the core part and the cladding from inside out in a radial direction.

During the irradiation operation in a fast neutron reactor, boron carbide swells due to irradiation and breaks due to factors such as thermal stress and helium retention. The volume expansion of the core part and the generation of fragments thereof are important factors affecting the service life of the control rod. The main mechanism is that the core part or fragments interact with the cladding material, which may cause damage to the cladding and affect the integrity of the control rod. In addition, the redistribution of small fragments of the core part in the control rod can easily cause the length of the core part to change, and also affect the arrangement integrity and reactivity distribution of the core part in the axial position, thereby damaging the function of the control rod. In addition, the free carbon element produced by boron carbide when subjected to irradiation penetrates into the cladding, causing the embrittlement of the material of the cladding, which is also a factor that threatens the integrity of the control rod.

Accordingly, the present application provides a control rod that can prevent the core part and the cladding from contacting each other, thereby solving the problem that the core part of the control rod is prone to interact with the cladding, thereby causing damage to the cladding.

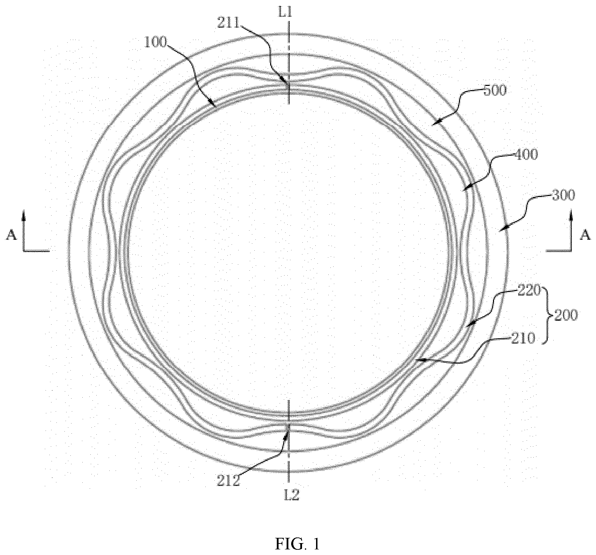

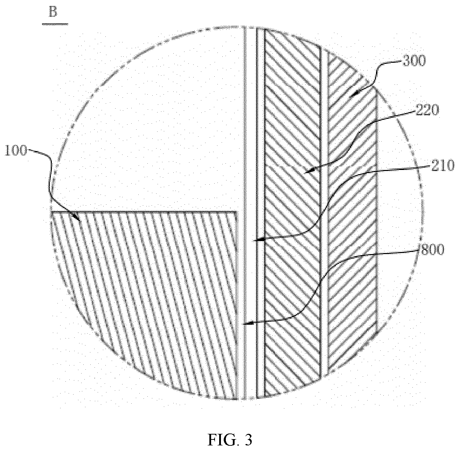

An embodiment of the present application provides a control rod. As shown in FIGS. 1 and 3, the control rod includes a core part 100, a bushing assembly 200 and a cladding 300. The bushing assembly 200 includes a first bushing 210 sleeved around the core part 100. The cladding 300 is sleeved around the first bushing 210. The first bushing 210 is configured to form a constraint structure surrounding the core part 100 to limit the expansion of the core part 100 in the radial direction of the core part 100.

As such, when the core part 100 swells or breaks due to radiation, the first bushing 210 is sleeved around the core part 100, and thus can limit the expansion of the core part 100 and limit moving directions of the fragments of the core part 100. This prevents the core part 100 and the cladding 300 from contacting each other, and ultimately alleviates the problem that the core part 100 of the current control rod easily interacts with the cladding 300 to cause the cladding 300 to be damaged.

In addition, the core part 100 may break during the fast neutron irradiation process. Since the first bushing 210 is sleeved around the core part 100, the fragments generated by the core part 100 breaking during the fast neutron irradiation can only fall into the opposite ends of the core part 100 in a longitudinal extending direction. For example, when a part of an end of the core part 100 in its longitudinal extending direction is damaged and generates fragments, the fragments may move radially around, but due to the limitation of the first bushing 210, the fragments can only move along an axis of the core part 100, and finally, the fragments can only fall back to the end of the core part 100 again. Due to the falling back of the fragments, the length of an absorber segment composed of the core part 100 does not change significantly. In this way, the space in the first bushing 210 receives the fragments generated by the core part 100 breaking during operation, and the radial migration of the fragments along the core part 100 can be limited, which can effectively avoid the problem of affecting the arrangement integrity and reactivity distribution in the axial position of the core part 100.

It should be noted that the control rod mainly functions as controlling the startup and shutdown of the nuclear reactor and regulating nuclear power, with a main principle of changing the number of neutrons and neutron density in the nuclear reactor to change the reactivity of the nuclear reactor in order to control the startup and shutdown of the nuclear reactor and regulate the nuclear power. The core part 100 serves as an absorber material to absorb neutrons. Therefore, the material used to make the core part 100 of the control rod is mainly boron or cadmium and other elements that are easy to absorb neutrons. Among them, boron carbide is widely used. The cladding 300 functions as preventing the escape of the absorber material, ensuring the reactivity equivalent of the control rod, and effectively conducting heat energy.

During the irradiation operation, the boron carbide as a material for making the core part 100 is prone to radiation swelling, which leads to contact between the boron carbide and the cladding 300 made of stainless steel. On the one hand, the contact between the boron carbide and the cladding 300 made of stainless steel produces mechanical action, thereby generating local stress, which may cause damage to the cladding 300. On the other hand, carburization occurs between the boron carbide and the cladding 300 made of stainless steel. The occurrence of carburization may cause the embrittlement of the material of the cladding 300 made of stainless steel, and further damage the structure of the cladding 300 made of stainless steel. If the structure of the cladding 300 is damaged, the absorber material may escape, reducing the reactivity equivalent of the control rod, and the nuclear reaction of the reactor cannot be effectively controlled, which may cause very serious consequences.

In the present application, the first bushing 210 is disposed between the core part 100 and the cladding 300. In this way, the core part 100 and the fragments of the core part 100 are isolated from the cladding 300 by the first bushing 210, so that no local contact occurs between the core part 100 and the fragments of the core part 100 and the cladding 300, it can ensure that the core part 100 does not mechanically interact with the cladding 300, and delay the carburization between the boron carbide and the cladding 300 made of stainless steel, thereby further protecting the cladding 300.

In some embodiments, a receiving space 800 is defined between the core part 100 and the first bushing 210, so that when the core part 100 expands to a small extent, the core part 100 does not generate tensile stress on the first bushing 210. In addition, when the core part 100 expands to a large extent, the core part 100 does not generate excessive tensile stress on the first bushing 210, thereby improving the service life of the first bushing 210. For example, a gap between the core part 100 and the first bushing 210 is 0.1 mm. The gap between the core part 100 and the first bushing 210 can be flexibly changed according to actual conditions, and which is not limited herein.

In some embodiments, the bushing assembly 200 further includes a second bushing 220 disposed between the first bushing 210 and the cladding 300. The second bushing 220 extends tortuously in its circumferential direction. In this way, the expansion of the core part 100 is further limited by the second bushing 220, and the carburization between the boron carbide and the cladding 300 made of stainless steel is further delayed, which can prevent the embrittlement of the material of the cladding 300, thereby improving the protection effect on the cladding 300.

It can be understood that the first bushing 210 acts as a first protective barrier, and the second bushing 220 acts as a second protective barrier. When the first bushing 210 is damaged due to the force of the core part 100, the second bushing 220 can still limit the expansion of the core part 100. In this way, the first bushing 210 and the second bushing 220 collectively limit the swelling of the core part 100 during operation, which can avoid the interaction between the core part 100 and the cladding 300, and then play a role in protecting the cladding 300.

Meanwhile, the second bushing 220 extends tortuously in its circumferential direction. For example, in the direction in which the second bushing 220 extends in its axial direction, a cross section of the second bushing 220 is in a wavy shape. The wavy shape design improves the plastic deformation capacity of the second bushing 220. The second bushing 220 generates elastic force during the deformation process, so that the first bushing 210 and the core part 100 are positioned by means of the elastic force.

In some embodiments, the first bushing 210 and the second bushing 220 are coaxially arranged. Further, the second bushing 220 has an axis. When the second bushing 220 positions the first bushing 210 and the core part 100, the axis of the first bushing 210 and the axis of the core part 100 coincide with the axis of the second bushing 220, so that the first bushing 210, the core part 100 and the second bushing 220 are coaxially arranged in sequence.

In this way, by arranging the first bushing 210, the core part 100 and the second bushing 220 coaxially, the tensile stress generated by the core part 100 due to irradiation is transferred to the first bushing 210 and the second bushing 220 in sequence, ensuring that the stress is evenly applied to the surfaces of the first bushing 210 and evenly applied to the surfaces of the second bushing 220, so as to increase the service life of the first bushing 210 and the service life of the second bushing 220.

In addition, the first bushing 210, the core part 100 and the second bushing 220 are coaxial, so that it can ensure that the core part 100 will not shake in the control rod during the transportation of the control rod assembly, and the circumferential uniformity of the gap between the core part 100 and the cladding 300 is guaranteed.

In some embodiments, a first gap space 400 is defined between the first bushing 210 and the second bushing 220.

The first bushing 210 has a first notch 211. The first notch 211 extends outwardly in the radial direction of the first bushing 210, from the side of the first bushing 210 adjacent to the core part 100. The first notch 211 is in communication with the first gap space 400. In this way, the first bushing 210 forms an open-loop structure through the first notch 211. When the first bushing 210 is deformed by the tensile stress caused by the expansion of the core part 100, the degree of deformation of the first bushing 210 can be increased by the design of the open-loop structure, thereby improving the tensile stress resistance of the first bushing 210. In addition, the first notch 211 can reduce the tensile stress on the first bushing 210, caused by the expansion of the core part 100, thereby reducing the damage to the first bushing 210 caused by the tensile stress and improving the service life of the first bushing 210.

In some embodiments, a second gap space 500 is defined between the second bushing 220 and the cladding 300, and the second bushing 220 has a second notch 212. The second notch 212 extends outwardly in the radial direction of the first bushing 210, from the side of the second bushing 220 adjacent to the first bushing 210. The second notch 220 is respectively in communication with the first gap space 400 and the second gap space 500. In this way, the second bushing 220 forms an open-loop structure through the second notch 212. When the second bushing 220 is deformed by the tensile stress generated by the deformation of the first bushing 210, the degree of deformation of the second bushing 220 can be increased by the design of the open-loop structure, thereby improving the tensile stress resistance of the second bushing 220. In addition, the second notch 212 can reduce the tensile stress on the second bushing 220 caused by the expansion of the core part 100, thereby reducing the damage to the second bushing 220 caused by the tensile stress and improving the service life of the second bushing 220.

In some embodiments, the center line L1 of the first notch is set at an angle to the center line L2 of the second notch.

In some embodiments, in the longitudinal extending direction of the first bushing 210, a cross section of the first notch 211 is in an axisymmetric shape. In the longitudinal extending direction of the second bushing 220, a cross section of the second notch 212 is in an axisymmetric shape. The symmetry center line of the first notch is set at an angle to the symmetry center line of the second notch 212.

In some embodiments, in the longitudinal extending direction of the first bushing 210, the cross section of the first notch 211 is in a rectangular shape; and in the longitudinal extending direction of the second bushing 220, the cross section of the second notch 212 is also in a rectangular shape. The shape of the cross section of the second notch 212 can be flexibly changed according to actual conditions and which is not limited herein.

It can be understood that the center line L1 running through the first notch is set at an angle to the center line L2 running through the second notch, so that the first notch 211 and the second notch 212 are staggered in the axial direction of the core part 100. In this way, when the tensile stress caused by the expansion of the core part 100 is concentrated on the first notch 211 and causes the first notch 211 to rupture, and then causes the first bushing 210 to be damaged, because of the first notch 211 and the second notch 212 being staggered in the axial direction of the core part 100, the tensile stress may act on a portion of the second bushing 220 without the notch, and thus the second bushing 220 can still limit the expansion of the core part 100, thereby playing a role in protecting the cladding 300.

In some embodiments, the angle between the center line L1 of the first notch and the center line L2 of the second notch is 180°. By setting the angle between the center line L1 of the first notch and the center line L2 of the second notch to be 180°, the first notch 211 and the second notch 212 are staggered in the axial direction of the core part 100, and the distance between the first notch 211 and the second notch 213 is the farthest.

It can be understood that when the tensile stress caused by the expansion of the core part 100 is concentrated on the first notch 211, and causes the first notch 211 to rupture, and then causes the first bushing 210 to be damaged, the tensile stress borne by the first notch 211 is maximum. Due to the rupture of the first notch 211, the tensile stress may be transmitted to the surface of the second bushing 220 in contact with the first notch 211. In this case, the tensile stress borne by the surface of the second bushing 220 in contact with the first notch 211 is also maximum, and at the same time, the tensile stress borne by the portion of each of sub-surfaces of the second bushing 220 farther distanced from such surface is minimum. By setting the angle between the center line L1 of the first notch and the center line L2 of the second notch to be 180°, and setting the distance between the first notch 211 and the second notch 212 to be the farthest, and then, the tensile stress borne by the second notch 212 is minimum, so that the second bushing 220 can limit the expansion of the core part 100 while further effectively protecting the second bushing 220.

In other embodiments, the angle between the center line L1 of the first notch and the center line L2 of the second notch may also be 90° or 60°, as long as the first notch 211 and the second notch 212 may be staggered in the axial direction of the core part 100. The first notch 211 and the second notch 212 may be flexibly designed according to actual conditions, and which are not limited herein.

In some embodiments, the control rod further includes a first end plug 600 and a second end plug 700 that are respectively connected to opposite ends of the cladding 300.

In some embodiments, the first end plug 600 and the second end plug 700 are respectively disposed at two ends of the cladding 300 in a sealed manner to seal the core part 100 in the cladding 300, so that the absorber fragments or powder generated during its service life does not leak into the circuit, thereby ensuring the normal operation of the control rod.

In some embodiments, the first bushing 110 and the second bushing 220 include molybdenum alloy bushings. Molybdenum alloy has good ductility and plastic deformation capabilities. In other embodiments, the first bushing 110 and the second bushing 220 include ferrite/martensitic stainless steel or molybdenum. The materials for the first bushing 110 and the second bushing 220 can be flexibly changed according to actual conditions, and which are not limited herein.

An embodiment of the present application further provides a control rod assembly, which includes the control rod(s) as described above. The control rod assembly includes at least one fixing component or grid. The control rod(s) is fixed in the fixing component or grid. The number and arrangement of the control rods can be varied. The control rod includes the core part 100, the bushing assembly 200 and the cladding 300. The bushing assembly 200 includes the first bushing 210 sleeved around the core part 100. The cladding 300 is sleeved around the first bushing 210. The first bushing 210 is configured to form a constraint structure surrounding the core part 100 to limit the expansion of the core part 100 in the radial direction of the core part 100.

In this way, when the core part 100 swells or breaks due to radiation, the volume expansion of the absorber core part 100 during operation is limited by the first bushing 210 because the first bushing 210 is sleeved around the core part 100. Meanwhile, the first bushing 210 accommodates the fragments generated by the core part 100 when the core part breaks during operation, and limits the radial migration of the fragments. The first bushing 210 forms a radial physical isolation between the cladding 300 and the core part 100, avoiding the surface contact between the cladding 300 and the core part 100 caused by the swelling and breaking of the core part 100, and finally improving the performance of the control rod assembly and prolonging the service life of the control rod assembly.

An embodiment of the present application provides a control rod, which includes a core part 100, a bushing assembly 200 and a cladding 300. The bushing assembly 200 includes a first bushing 210 sleeved around the core part 100. The cladding 300 is sleeved around the first bushing 210. The first bushing 210 is configured to form a constraint structure surrounding the core part 100 to limit the expansion of the core part 100 in the radial direction of the core part 100. In this way, when the core part 100 swells or breaks due to radiation, the first bushing 210 can limit the expansion of the core part 100 and the moving directions of the fragments of the core part 100 because the first bushing 210 is sleeved around the core part 100. Thus, the core part 100 and the cladding 300 are prevented from contacting each other, and finally the problem that the core part 100 of the current control rod is prone to interact with the cladding 300 to cause the cladding 300 to be damaged is alleviated.

The technical features of the above-mentioned embodiments can be combined in any way. In order to make the description concise, not all possible combinations of the technical features are described in the embodiments. However, as long as there is no contradiction in the combination of these technical features, the combinations should be considered as in the scope of the present application.

## Claims

1. A control rod, comprising:
a core part (100);
a bushing assembly (200) comprising a first bushing (210) sleeved around the core part (100); and
a cladding (300) sleeved around the first bushing (210),
wherein the first bushing (210) is configured to form a constraint structure surrounding the core part (100) so as to limit expansion of the core part (100) in a radial direction of the core part (100);
wherein the bushing assembly (200) further comprises a second bushing (220) disposed between the first bushing (210) and the cladding (300), and the second bushing (220) extending tortuously in a circumferential direction thereof;
**characterised in that** a first gap space (400) is defined between the first bushing (210) and the second bushing (220);
the first bushing (210) has a first notch (211), and wherein the first notch (211) extends outwardly in a radial direction of the first bushing (210) from a side of the first bushing (210) adjacent to the core part (100); and the first notch (211) is in communication with the first gap space (400).

2. The control rod according to claim 1, wherein a cross section of the second bushing (220) is in a wavy shape.

3. The control rod according to claim 1, wherein the first bushing (210) and the second bushing (220) are coaxially arranged;
and optionally wherein the first bushing (210), the core part (100) and the second bushing (220) are coaxially arranged.

4. The control rod according to claim 1, wherein a second gap space (500) is defined between the second bushing (220) and the cladding (300);
the second bushing (220) has a second notch (212), and wherein the second notch (212) extends outwardly in a radial direction of the second bushing (220) from a side of the second bushing (220) adjacent to the first bushing (210); and the second notch (212) is respectively in communication with the first gap space (400) and the second gap space (500).

5. The control rod according to claim 4, wherein a center line of the first notch (211) is set at an angle to a center line of the second notch (212).

6. The control rod according to claim 5, wherein in a longitudinal extending direction of the first bushing (210), a cross section of the first notch (211) is in an axisymmetric shape; in a longitudinal extending direction of the second bushing (220), a cross section of the second notch (212) is in an axisymmetric shape; and a symmetry center line of the first notch (211) is set at an angle to a symmetry center line of the second notch (212);
and optionally wherein in the longitudinal extending direction of the first bushing (210), the cross section of the first notch (211) is in a rectangular shape; and in the longitudinal extending direction of the second bushing (220), the cross section of the second notch (212) is also in a rectangular shape.

7. The control rod according to any one of claims 4 to 6, wherein an angle between a center line of the first notch (211) and a center line of the second notch (212) is 180°;
or, an angle between a center line of the first notch (211) and a center line of the second notch (212) is 90° or 60°.

8. The control rod according to any one of claims 4 to 7, wherein the first notch (211) and the second notch (212) are staggered in an axial direction of the core part (100).

9. The control rod according to any one of claims 1 to 8, further comprising a first end plug (600) and a second end plug (700) that are respectively connected to opposite ends of the cladding (300).

10. The control rod according to any one of claims 1 to 9, wherein the first bushing (210) comprises a molybdenum bushing or a molybdenum alloy bushing.

11. The control rod according to any one of claims 1 to 10, wherein a receiving space (800) is defined between the core part (100) and the first bushing (210);
and optionally wherein a gap between the core part (100) and the first bushing (210) is 0.1 mm.

12. A control rod assembly, comprising the control rod according to any one of claims 1 to 11.

13. The control rod assembly according to claim 12, further comprising at least one fixing component or at least one grid, wherein the control rod is fixed in the fixing component or the grid.

## Patentansprüche

1. Steuerstab, der Folgendes umfasst:
einen Kernteil (100);
eine Buchsenanordnung (200), die eine erste Buchse (210) umfasst, die den Kernteil (100) umgibt; und
eine Umhüllung (300), die die erste Buchse (210) umgibt, wobei die erste Buchse (210) dazu ausgelegt ist, eine Beschränkungsstruktur zu bilden, die den Kernteil (100) umgibt, um eine Ausdehnung des Kernteils (100) in einer radialen Richtung des Kernteils (100) zu begrenzen;
wobei die Buchsenanordnung (200) ferner eine zweite Buchse (220) umfasst, die zwischen der ersten Buchse (210) und der Umhüllung (300) angeordnet ist, und wobei sich die zweite Buchse (220) gewunden in einer Umfangsrichtung davon erstreckt;
**dadurch gekennzeichnet, dass**
ein erster Spaltraum (400) zwischen der ersten Buchse (210) und der zweiten Buchse (220) definiert ist;
die erste Buchse (210) eine erste Kerbe (211) aufweist, und wobei sich die erste Kerbe (211) in einer radialen Richtung der ersten Buchse (210) von einer Seite der ersten Buchse (210) angrenzend an den Kernteil (100) nach außen erstreckt; und die erste Kerbe (211) in Verbindung mit dem ersten Spaltraum (400) steht.

2. Steuerstab nach Anspruch 1, wobei ein Querschnitt der zweiten Buchse (220) eine wellenförmige Form aufweist.

3. Steuerstab nach Anspruch 1, wobei die erste Buchse (210) und die zweite Buchse (220) koaxial angeordnet sind;
und wobei optional die erste Buchse (210), der Kernteil (100) und die zweite Buchse (220) koaxial angeordnet sind.

4. Steuerstab nach Anspruch 1, wobei ein zweiter Spaltraum (500) zwischen der zweiten Buchse (220) und der Umhüllung (300) definiert ist;
wobei die zweite Buchse (220) eine zweite Kerbe (212) aufweist, und wobei sich die zweite Kerbe (212) in einer radialen Richtung der zweiten Buchse (220) von einer Seite der zweiten Buchse (220) angrenzend an die erste Buchse (210) nach außen erstreckt; und wobei die zweite Kerbe (212) jeweils in Verbindung mit dem ersten Spaltraum (400) und dem zweiten Spaltraum (500) steht.

5. Steuerstab nach Anspruch 4, wobei eine Mittellinie der ersten Kerbe (211) in einem Winkel zu einer Mittellinie der zweiten Kerbe (212) eingestellt ist.

6. Steuerstab nach Anspruch 5, wobei in einer Längserstreckungsrichtung der ersten Buchse (210) ein Querschnitt der ersten Kerbe (211) eine achsensymmetrische Form aufweist; wobei in einer Längserstreckungsrichtung der zweiten Buchse (220) ein Querschnitt der zweiten Kerbe (212) eine achsensymmetrische Form aufweist; und wobei eine Symmetriemittellinie der ersten Kerbe (211) in einem Winkel zu einer Symmetriemittellinie der zweiten Kerbe 212) eingestellt ist;
und wobei optional in der Längserstreckungsrichtung der ersten Buchse (210) der Querschnitt der ersten Kerbe (211) eine rechteckige Form aufweist; und wobei in der Längserstreckungsrichtung der zweiten Buchse (220) der Querschnitt der zweiten Kerbe (212) auch eine rechteckige Form aufweist.

7. Steuerstab nach einem der Ansprüche 4 bis 6, wobei ein Winkel zwischen einer Mittellinie der ersten Kerbe (211) und einer Mittellinie der zweiten Kerbe (212) 180° beträgt;
oder wobei ein Winkel zwischen einer Mittellinie der ersten Kerbe (211) und einer Mittellinie der zweiten Kerbe (212) 90° oder 60° beträgt.

8. Steuerstab nach einem der Ansprüche 4 bis 7, wobei die erste Kerbe (211) und die zweite Kerbe (212) in einer axialen Richtung des Kernteils (100) versetzt sind.

9. Steuerstab nach einem der Ansprüche 1 bis 8, ferner umfassend einen ersten Endstopfen (600) und einen zweiten Endstopfen (700), die jeweils mit gegenüberliegenden Enden der Umhüllung (300) verbunden sind.

10. Steuerstab nach einem der Ansprüche 1 bis 9, wobei die erste Buchse (210) eine Molybdänbuchse oder eine Molybdänlegierungsbuchse umfasst.

11. Steuerstab nach einem der Ansprüche 1 bis 10, wobei ein Aufnahmeraum (800) zwischen dem Kernteil (100) und der ersten Buchse (210) definiert ist;
und wobei optional ein Spalt zwischen dem Kernteil (100) und der ersten Buchse (210) 0,1 mm beträgt.

12. Steuerstabanordnung, umfassend den Steuerstab nach einem der Ansprüche 1 bis 11.

13. Steuerstabanordnung nach Anspruch 12, ferner umfassend mindestens eine Fixierkomponente oder mindestens ein Gitter, wobei der Steuerstab in der Fixierkomponente oder dem Gitter fixiert ist.

## Revendications

1. Barre de commande, comprenant :
une partie âme (100) ;
un ensemble de douilles (200) comprenant une première douille (210) emmanchée autour de la partie âme (100) ; et
un gainage (300) emmanché autour de la première douille (210),
dans laquelle la première douille (210) est configurée pour former une structure de contrainte entourant la partie âme (100) afin de limiter l'agrandissement de la partie âme (100) dans une direction radiale de la partie âme (100) ;
dans laquelle l'ensemble de douilles (200) comprend en outre une seconde douille (220) disposée entre la première douille (210) et le gainage (300), et la seconde douille (220) s'étendant de façon sinueuse dans une direction circonférentielle de celle-ci ;
**caractérisée en ce que**
un premier espace d'écart (400) est défini entre la première douille (210) et la seconde douille (220) ;
la première douille (210) a une première entaille (211), et dans laquelle la première entaille (211) s'étend vers l'extérieur dans une direction radiale de la première douille (210) depuis un côté de la première douille (210) adjacent à la partie âme (100) ; et la première entaille (211) est en communication avec le premier espace d'écart (400).

2. Barre de commande selon la revendication 1, dans laquelle une section transversale de la seconde douille (220) est en forme ondulée.

3. Barre de commande selon la revendication 1, dans laquelle la première douille (210), et la seconde douille (220) sont agencées coaxialement ;
et, facultativement, dans laquelle la première douille (210), la partie âme (100), et la seconde douille (220) sont agencées coaxialement.

4. Barre de commande selon la revendication 1, dans laquelle un second espace d'écart (500) est défini entre la seconde douille (220) et le gainage (300) ;
la seconde douille (220) a une seconde entaille (212), et dans laquelle la seconde entaille (212) s'étend vers l'extérieur dans une direction radiale de la seconde douille (220) depuis un côté de la seconde douille (220) adjacent à la première douille (210) ; et la seconde entaille (212) est respectivement en communication avec le premier espace d'écart (400) et le second espace d'écart (500).

5. Barre de commande selon la revendication 4, dans laquelle une ligne centrale de la première entaille (211) est réglée à un angle relativement à une ligne centrale de la seconde entaille (212).

6. Barre de commande selon la revendication 5, dans laquelle, dans une direction d'extension longitudinale de la première douille (210), une section transversale de la première entaille (211) est en forme axisymétrique ; dans une direction d'extension longitudinale de la seconde douille (220), une section transversale de la seconde entaille (212) est en forme axisymétrique ; et une ligne centrale de symétrie de la première entaille (211) est réglée à un angle relativement à une ligne centrale de symétrie de la seconde entaille (212) ;
et, facultativement, dans laquelle, dans la direction d'extension longitudinale de la première douille (210), la section transversale de la première entaille (211) est en forme rectangulaire ; et, dans la direction d'extension longitudinale de la seconde douille (220), la section transversale de la seconde entaille (212) est également en forme rectangulaire.

7. Barre de commande selon l'une quelconque des revendications 4 à 6, dans laquelle un angle entre une ligne centrale de la première entaille (211) et une ligne centrale de la seconde entaille (212) est de 180° ;
ou, un angle entre une ligne centrale de la première entaille (211) et une ligne centrale de la seconde entaille (212) est de 90° ou de 60°.

8. Barre de commande selon l'une quelconque des revendications 4 à 7, dans laquelle la première entaille (211) et la seconde entaille (212) sont décalées dans une direction axiale de la partie âme (100).

9. Barre de commande selon l'une quelconque des revendications 1 à 8, comprenant en outre un premier bouchon d'extrémité (600) et un second bouchon d'extrémité (700) qui sont respectivement raccordés à des extrémités opposées du gainage (300).

10. Barre de commande selon l'une quelconque des revendications 1 à 9, dans laquelle la première douille (210) comprend une douille en molybdène ou une douille en alliage de molybdène.

11. Barre de commande selon l'une quelconque des revendications 1 à 10, dans laquelle un espace de réception (800) est défini entre la partie âme (100) et la première douille (210) ;
et, facultativement, dans laquelle un écart entre la partie âme (100) et la première douille (210) est de 0,1 mm.

12. Ensemble à barre de commande, comprenant la barre de commande selon l'une quelconque des revendications 1 à 11.

13. Ensemble à barre de commande selon la revendication 12, comprenant en outre au moins un composant de fixation ou au moins une grille, dans laquelle la barre de commande est fixée dans le composant de fixation ou la grille.
